# EUROPEAN PATENT APPLICATION

(11) **EP 4 745 042 A1**
(43) Date of publication of application: **20.05.2026**
(21) Application number: 24383252.4
(22) Date of filing: 19.11.2024
(51) Int. Cl.: B64F 5/10, B64F 5/60

(54) **METHOD AND SYSTEM FOR DETERMINING THE ADMISSIBILITY OF AN AIRCRAFT WORKPIECE IN AN ASSEMBLY PROCESS OF THE AIRCRAFT WORKPIECE**

(71) Applicant: AIRBUS OPERATIONS, S.L.U., 28906 Getafe, Madrid (ES)
(72) Inventor: GONZÁLEZ SAINZ, Javier, E-28906 Getafe, Madrid (ES); SÁNCHEZ SUAZO, Bartolomé, E-28906 Getafe, Madrid (ES)
(74) Representative: ABG Intellectual Property Law, S.L.

(57) **Abstract**

The present invention belongs to the field of aircraft assembly process and, in particular, relates to a method and system for determining the admissibility of an aircraft workpiece on an assembly line of the aircraft workpiece.

## Description

### TECHNICAL FIELD OF THE INVENTION

The present invention belongs to the field of aircraft assembly process and, in particular, relates to a method and system for determining the admissibility of an aircraft workpiece on an assembly line of said aircraft workpiece.

### BACKGROUND OF THE INVENTION

The majority of aircraft components, aircraft parts and complete aircraft machine assemblies are completed on assembly jigs. In the context of the present invention, the term "aircraft workpiece" is used to refer to an aircraft component, an aircraft part or a complete aircraft machine assembly.

An assembly jig typically comprises a frame within which an aircraft workpiece is supported throughout the different steps of the assembly process, within the specified tolerances. Some assembly jigs may comprise a plurality of tooling or analogous devices to clamp and support the parts of the aircraft workpiece from multiple points during the different steps of the assembly process within the specified tolerances. The utilisation of assembly jigs and their associated tooling is of paramount importance in ensuring the precise positioning and alignment of the different parts of an aircraft workpiece during the assembly process of the aircraft workpiece within an assembly line.

Some aircraft workpieces comprise at least one hinge line between two parts being assembled together in a pivoting manner in the aircraft workpiece. When assembling said aircraft workpiece comprising at least one hinge line, it is of the utmost importance to ensure the correct assembly of an aircraft workpiece with at least one hinge line in order to achieve the specified final geometry of this hinge line.

The assembly procedure of an aircraft workpiece with at least one hinge line using assembly jigs presents a challenge in ensuring the correct adjustment of the tooling. Misadjustment of the tooling could result in an incorrect assembly of the at least one hinge line of the aircraft parts in the aircraft workpiece, which could have a significant impact on the productivity of the factory, including costs, recurrent expenditure and delayed schedules.

In the existing process for assembling an aircraft workpiece with at least one hinge line, any deviations from the intended hinge line are typically identified at the end of the production cycle through the use of measuring equipment on the final aircraft workpiece. This measuring equipment typically comprises a laser tracker device and auxiliary tools that are adapted to measure the deviation of different points of the aircraft workpiece hinge line in relation to the reference centreline. This is done in order to verify that part alignment and stress levels ensure compliance with specifications after the assembly process has been completed. This final verification step requires a certain investment of time, and in some cases, if a misalignment of the hinge line is detected, the aircraft workpiece is not suitable for use and should be disregarded.

An alternative conventional method for determining the admissibility of an aircraft workpiece in an assembly process of the aircraft workpiece with at least one hinge line is through the use of assembly tooling installed in each jig, as previously indicated. Each of the assembly tooling is adjusted according to the design data and subject to periodic review, although this does not occur on in each instance of aircraft workpiece execution. As a result, in the event of an error in one tooling, this is only identified when the aforementioned means undergoes a scheduled revision. It can thus be concluded that this alternative conventional method is not reliable, as an unacceptable deviation from the intended hinge line of a final assembled aircraft workpiece may not be identified during the production cycle. This could result in a potential assembled aircraft workpiece defect, which would represent a significant issue for any aircraft manufacturer.

Finally, another conventional method for determining the admissibility of an aircraft workpiece in an assembly process of the aircraft workpiece having at least one hinge line is through the expertise of professional workers who have received training in the skills and competencies required for these aeronautical assembly tasks. However, this option relies on the expertise of professional workers, and there is a risk of human error occurring.

As a result, there is a need for an alternative and efficient solution for a method and system for determining the admissibility of an aircraft workpiece in an assembly process of the aircraft workpiece on an assembly line, wherein preferably the aircraft workpiece has at least one hinge line.

### SUMMARY OF THE INVENTION

The present invention provides a solution for the aforementioned problems by a method for determining the admissibility of an aircraft workpiece in an assembly process of the aircraft workpiece according to claim 1 and a system for determining the admissibility of an aircraft workpiece in an assembly process of the aircraft workpiece according to claim 9. In dependent claims, embodiments of the invention are defined.

In a first inventive aspect, the invention provides a method for determining the admissibility of an aircraft workpiece on an assembly line of the aircraft workpiece, the aircraft workpiece being supported by a support frame through a plurality of tooling throughout the assembly process; the method comprising the following steps for at least one assembly line station:
- measuring stress at attachment points of the aircraft workpiece to the tooling of the support frame by means of a plurality of stress measuring sensors arranged in one or more tooling of the support frame;
- receiving in a capture module of a processing unit stress measurement data from at least one stress measuring sensor; and
- determining, in an Artificial Intelligence module of the processing unit, based on the stress measurement data from at least one stress measuring sensor, whether the aircraft workpiece currently being assembled would result as inadmissible after performing one or more assembly steps that have not yet been applied to the current aircraft workpiece; wherein the Artificial Intelligence module comprises an Artificial Intelligence algorithm that has been trained using training data relative to admissible and/or non-admissible geometric values data of at least one part of the aircraft workpiece and their corresponding measured stress.

As previously indicated, in the context of the present invention, the term "aircraft workpiece" is used to refer to an aircraft component, an aircraft part, or a complete aircraft machine assembly that is being assembled. In an example where the aircraft workpiece comprises at least two different parts which are assembled together in a pivoting manner via at least one hinge line, the term "aircraft workpiece" is used to refer to the first part of the final pivot assembly in the initial stages of the assembly process. Similarly, the same term "aircraft workpiece" is also used to refer to the final pivot assembly comprising the assembled first and the second parts in the final stages of the of the assembly process.

The present method is intended to be carried out during an assembly process in an assembly line of an aircraft workpiece. The assembly line of an assembly process comprises one or more assembly line stations, and at each assembly station different parts of the aircraft workpiece are assembled along the assembly line. In order to facilitate the assembly process, the aircraft workpiece is supported on a support frame and is joined to this support frame through a plurality of tooling. That is to say, there is a plurality of tooling that are adapted to keep the aircraft workpiece or parts of the same supported on the support frame.

According to the first aspect of the invention, the method measures the stress occurring in at least one attachment point of the aircraft workpiece to the tooling in at least one assembly line station of the aircraft workpiece assembly process and which could affect the aircraft workpiece. By a processing unit, the method determinates the admissibility of said measured stress. Specifically, the processing unit comprises at least three distinct modules: a capture module, an analysis module, and an Artificial Intelligence module.

In particular, the capture module is configured to receive data from at least one of the stress measuring sensors about the stress measured at the attachment points of the aircraft workpiece to the tooling of the support frame. Then, the Artificial Intelligence module determines, based on the stress measurement data from at least one stress measuring sensor, whether the aircraft workpiece currently being assembled would result as inadmissible after performing one or more assembly steps that have not yet been applied to this aircraft workpiece. For admissibility determination of the aircraft workpiece, the Artificial Intelligence module comprises an algorithm trained with training data relative to admissible and/or non-admissible geometric values data of at least one part of the aircraft workpiece and their corresponding measured stress for the specific assembly line station. For instance, the Artificial Intelligence module algorithm has been trained with training data relative to historical admissible and/or non-admissible geometric values data of at least one part of the particular aircraft workpiece and their corresponding measured stress in a specific assembly line station during the method's development phase, that is, prior to its implementation.

Advantageously, this method allows the detection and prevention of any assembly task that produces a deviation in the aircraft workpiece. In particular, this method offers the advantage of enabling the detection and prevention of any assembly task that produces a deviation in the hinge line of an aircraft workpiece comprising at least two parts assembled in a pivotable manner via this hinge line. This avoids the necessity for reworks at the end of the assembly process. In the event of an inadmissible result, at least one part of the aircraft workpiece being determined as inadmissible by the present method. Then, a worker may modify, for example, the assembly process parameters in order to adjust the forces and alignments of the tooling, thereby correcting the potential misalignments in an intermediate assembly step of the aircraft workpiece. This will result in achieving optimal stress levels in a final aircraft workpiece, which is free from assembly errors such as hinge line misalignment.

Therefore, the method permits the avoidance of an additional verification step in the assembly process, generally at the end of the assembly process, as the method is conducted at the same time as the required assembly operations for the aircraft workpiece in the at least one assembly line station.

In an embodiment, the steps of the method are performed at a plurality of assembly line stations of the assembly line, preferably at each assembly line station of the assembly line of the aircraft workpiece. Therefore, the method measures the admissibility of the stress that arises throughout the entirety assembly process of the aircraft workpiece, and which could affect, for example, the hinge line assembly. This solution allows for the fast detection and prevention of any assembly task that produces a deviation in the aircraft workpiece to be assembled, preferably in the hinge line of the aircraft workpiece, thereby avoiding the necessity for reworks at the end of the process. The implementation of a step-by-step verification process ensures that each stage of assembly is completed correctly before proceeding to the subsequent phase.

In other embodiments, the steps of the method are performed at a plurality of assembly line stations of the assembly line.

In a preferred embodiment, the aircraft workpiece comprises at least one hinge line between two parts of the aircraft workpiece being assembled in a pivoting manner; wherein the determining step of the method receives at least the stress measurement data from at least two stress measuring sensors arranged at the respective position of at least two attachment points of the aircraft workpiece to the tooling that correspond to points of the at least one hinge line. In this preferred embodiment, the method according to the first aspect of the invention is therefore suitable for any aircraft component that has at least one hinge line. The aircraft workpiece may be of different types, including, but not limited to a wing, flap, slap, slat, elevator, vertical tail plane torsion box, rudder or horizontal tail plane torsion box. In each of the aforementioned examples, the aircraft component may exhibit different configurations, that is to say, different shapes and sizes. In this embodiment, the Artificial Intelligence module of the processing unit is configured for determining whether at least one hinge line of the aircraft workpiece is inadmissible in terms of its correct alignment in a process step based on the measured stress. The process step in question can be any process step performed in an assembly line station during any stage of the assembly process, and not solely the final stage.

In an embodiment, the support frame, together with the aircraft workpiece that it is supporting, is moved in a progressive manner to different assembly line stations during the assembly process. Preferably, the support frame, together with the aircraft workpiece that it is supporting, is moved in an aerial manner by means of transport.

In an embodiment, the step of receiving in a capture module of the processing unit stress measurement data from at least one stress measuring sensor comprises:
- receiving a corresponding position of measurement of each stress measuring sensors on the aircraft workpiece; and
- obtaining, by an analysis module of the processing unit, a map of the measured stress received by the capture module, wherein the map represents each measured stress received over different times during the assembly process, with each measured stress associated with the corresponding position of measurement of each stress measuring sensors on the aircraft workpiece.

In a preferred embodiment, the stress measurement data is a real-time measurement data, meaning that the plurality of stress measurement sensors measure in a continuous manner.

In a particular embodiment, the obtained map of the measured stress is a near real-time map. The term "near real-time map" is used to describe the stress values that are measured in real time by at least one of the plurality of stress measuring sensors during the assembly process and which are recorded in the analysis module preferably at discrete time intervals in the at least one assembly line station. Said time intervals may vary according to the frequency of the sensors being used.

Therefore, the method continuous monitors the stress occurring in at least one attachment point of the aircraft workpiece in at least one assembly line station of the assembly process of the aircraft workpiece during the assembly process in real-time.

In an embodiment, in the event that the aircraft workpiece is determined by the Artificial intelligence module to be inadmissible, the method comprises the step of providing, preferably in real time:
- one or more corrective actions to modify the aircraft workpiece and/or the assembly process, and/or
- a warning.

Preferably, the warning is an activation of a light and/or sound warning.

The objective of these corrective measures is to implement the requisite actions to guarantee the workpiece's admissibility at the conclusion of the assembly process. For example, these corrective measures may entail verifying that the tooling is securely anchored and that the part is securely installed in the tooling.

In an embodiment, the one or more corrective actions are intended for implementation at one or more stages subsequent to those already carried out on the assembly line. Consequently, there is no need to go backwards in the assembling process of the aircraft workpiece, but only to perform some or all of the following assembly stages in a different manner in order to ensure that the resulting aircraft workpiece assembly is permissible.

In an embodiment, the step of stress measuring comprises, for at least one assembly line station:
- measuring stress before the assembly process of the aircraft workpiece starts at the at least one assembly line station, and
- measuring stress after the assembly process of the aircraft workpiece is finished at the at least one assembly line station.

In an embodiment, during the assembly process of the aircraft workpiece on the support frame, the method further comprises the following step:
- receiving in the analysis module and in the Artificial intelligence module the data associated with the actual assembly line station where the support frame supporting the aircraft workpiece is currently located in the assembly process from one or more sensors.

The aforementioned one or more position sensors are adapted to identify in which assembly line station is located the support frame that is supporting the aircraft workpiece currently being assembled. In an embodiment, the sensor is an identification device, such as an identification code.

In an embodiment, the Artificial Intelligence algorithm is a Machining and Deep Learning artificial intelligence algorithm.

In a second inventive aspect, the invention provides a system for determining the admissibility of an aircraft workpiece on an assembly line of the aircraft workpiece, the system comprising:
- a support frame configured for supporting the aircraft workpiece throughout an assembly process, wherein the support frame comprises a plurality of tooling adapted for supporting the aircraft workpiece from different attachment points;
- a plurality of stress measuring sensors arranged in one or more tooling of the support frame, wherein each stress measuring sensor is configured to measure stress at an attachment point of the aircraft workpiece to the tooling of the support frame; and
- a processing unit comprising a capture module and an Artificial Intelligence module, wherein the capture module is in data communication with the plurality of stress measuring sensors, and the processing unit is configured for, for at least one of the assembly line station in an assembly process of the aircraft workpiece:
   - receiving in the capture module stress measurement data from at least one stress measuring sensor; and
   - determining, in the Artificial Intelligence module, whether the aircraft workpiece currently being assembled would result as inadmissible after performing one or more assembly steps that have not yet been applied to this aircraft workpiece, based the stress measurement data from at least one stress measuring sensor; wherein the Artificial Intelligence module comprises an Artificial Intelligence algorithm that has been trained using training data relative to admissible and/or non-admissible geometric values data of at least one part of the aircraft workpiece and their corresponding measured stress.

The system according to the present invention is adapted for determining the admissibility of an aircraft workpiece in an assembly process of the aircraft workpiece on an assembly line.

In an embodiment, the system of the second inventive aspect is configured to carry out the method of the first inventive aspect.

In another embodiment, the method of the first inventive aspect is carried out in the system of the second inventive aspect.

In an embodiment, the aircraft workpiece being assembled in an assembly line comprises at least one hinge line between two parts, which are assembled together in a pivoting manner.

In an embodiment, the aircraft workpiece may be of different types, including, but not limited to a wing, flap, slap, slat, elevator, vertical tail plane torsion box, rudder or horizontal tail plane torsion box. In each of the aforementioned examples, the component may exhibit different configurations, that is to say, different shapes and sizes.

According to the second inventive aspect, the system comprises a support frame which is configured for supporting an aircraft workpiece during the assembly process, wherein the support frame comprises a plurality of tooling adapted for supporting the aircraft workpiece from different attachment points. The support frame may have different configurations according to the aircraft workpiece to be supported within the frame. For example, the support frame comprises a rectangular frame within which the aircraft workpiece is supported through a plurality of tooling.

In an embodiment of the system, the plurality of tooling for supporting an aircraft workpiece at different attachment points are distributed in specific positions around or along an interior part of the support frame. In other embodiments, the plurality of tooling are distributed in specific positions only in some parts of the support frame, for example distributed along an upper side and a lower side of the support frame.

Each tooling comprises an end part adapted to attach and support the tooling to a specific point on the aircraft workpiece within predetermined tolerances. It is these end parts of the tooling that come into direct contact with the workpiece.

The support frame and the tooling are designed in accordance with the specific requirements of each type of aircraft workpiece. Consequently, the configuration, the number and the position of each tooling component within a given support frame may vary in order to accommodate the dimensions and shapes of the specific aircraft workpiece. Furthermore, for a given support frame, the configuration of one tooling may differ from that of the other tooling within the same support frame.

In an embodiment of the system, the support frame is configured to be moved between the different assembly line stations in an aerial manner. For this reason, the support frame comprises means for displacing it in an aerial manner, such as hooks in the upper part of the support frame.

In an embodiment of the system, the support frame is a production jig. In a particular embodiment, the support frame is a floor standing production jig. In another particular embodiment, the support frame is a floor standing production jig.

The system according to the second inventive aspect further comprises a plurality of stress measuring sensors arranged in one or more tooling of the support frame. Each stress measuring sensor is configured to measure stress in a respective attachment point of the aircraft workpiece to the tooling of the support frame. The tooling are located at critical points on the parts of a specific aircraft workpiece, thus enabling the assessment of stress at the corresponding critical point through the utilisation of at least one stress measuring sensor. Prior to the assembly process, a comprehensive finite element analysis may be conducted to assist in forecasting how the parts will respond to diverse loads and constraints. This preceding simulation may identify potential stress points and guide the design of jigs and assembly procedures.

In an embodiment of the system, the capture module comprises an analysis module; and the processing unit is configured for, for at least one of the assembly line station in an assembly process of the aircraft workpiece:
- receiving a corresponding position of measurement of each stress measuring sensors on the aircraft workpiece; and
- obtaining, by the analysis module, a map of the measured stress received by the capture module, wherein the map represents each measured stress received over different times during the assembly process, with each measured stress associated with the corresponding position of measurement of each stress measuring sensors on the aircraft workpiece.

In an embodiment of the system, each stress measuring sensor is configured to measure in real-time stress at the attachment points of the aircraft workpiece to the tooling of the support frame. In this embodiment, the stress measurement data are a real-time stress measurement data. In this embodiment, the map of the measured stress is a real-time map.

In an embodiment of the system, each of the stress measuring sensors comprises one or more strain gages which are configured to output an electric signal. In an embodiment, the one or more strain gages are cells, transducers or strain gauges in a Wheatstone Bridge configuration. Preferably, the one or more strain gages are of the type of a strain gage load cell.

In an embodiment of the system, each stress measuring sensor is located in one respective tooling of the support frame. Consequently, there is a one-to-one correspondence between a stress-measuring sensor and a specific tooling of the support frame.

In an embodiment of the system, each stress measuring sensor is arranged embedded in a specific position of an end part of a tooling.

Moreover, the system further comprises a processing unit comprising a capture module and an Artificial Intelligence module. The capture module is in data communication with the plurality of stress measuring sensors. The capture module is in data communication with the plurality of stress measuring sensors. The capture module is also in data communication with the Artificial Intelligence module such that the stress measurement data from the at least one stress measuring data is transmitted to the Artificial Intelligence module.

The processing unit is configured for, for at least one of the assembly line station in an assembly process of the aircraft workpiece:
- receiving in the capture module stress measurement data from the at least one stress measuring sensor; and
- determining, in the Artificial Intelligence module, whether the aircraft workpiece currently being assembled would result as inadmissible after performing one or more assembly steps that have not yet been applied to this aircraft workpiece, based the stress measurement data from at least one stress measuring sensor; wherein the Artificial Intelligence module comprises an Artificial Intelligence algorithm that has been trained using training data relative to admissible and/or non-admissible geometric values data of at least one part of the aircraft workpiece and their corresponding measured stress.

In a preferred embodiment, for at least one of the assembly line station in an assembly process of the aircraft workpiece, the processing unit is configured for:
- receiving in the capture module stress measurement data from a plurality of stress measuring sensors, thus receiving stress measurement data in each respective attachment point of the aircraft workpiece to the tooling of the support frame where a stress measuring sensor is disposed.

In an embodiment of the system, in the event that the Artificial Intelligence module determines that the aircraft workpiece is inadmissible, the Artificial Intelligence module is configured to output, preferably in real time, one or more corrective actions to modify the aircraft workpiece or the assembly process. The one or more corrective actions are based on the data analysis in the Artificial Intelligence module. Thus, in the event that an inadmissible aircraft workpiece is determined by the system, an operator may be assisted by the system in performing at least one specific corrective action within the process, with the aim of rectifying the misalignment situation, if possible. Such corrective actions may include, for instance, verifying that the tooling is securely anchored, and that the part is securely installed in the tooling.

In a particular embodiment, the system further comprises light and/or sound warning means in communication with the processing unit; wherein the processing unit is configured for commanding, preferably in real-time, the activation of the light and/or sound warning means when an inadmissible assembly situation is identified by the Artificial Intelligence module. Consequently, in the event that an inadmissible assembly situation is determined by the system, an operator may be alerted through the use of a light and/or sound warning, thereby enabling him to conduct corrective action within the process to rectify the misalignment situation, if possible.

In an embodiment of the system, the capture module is configured for receiving at least:
- an initial stress measurement from at least one of the plurality of stress measuring sensors before the assembly process of the aircraft workpiece starts at the at least one assembly line station, and
- a final stress measurement data from at least one of the plurality of stress measuring sensors after the assembly process of the aircraft workpiece is finished at the at least one assembly line station.

In another embodiment of the system, the capture module is configured for receiving, in addition to the initial and a final stress measurement from at least one of the plurality of the stress measuring sensors, stress measurement from the plurality of stress measuring sensors during the assembly process in the at least one assembly line station.

In an embodiment, the system comprises at least one sensor for detecting the current position of the support frame in the assembly line station; and wherein the analysis module and the Artificial Intelligence module are configured for, during the assembly process of the aircraft workpiece on the support frame:
- receiving data regarding the current position of the support frame from the at least one sensor.

In an embodiment of the system, the Artificial Intelligence algorithm is a Machining and Deep Learning artificial intelligence algorithm.

All the features described in this specification (including the claims, description and drawings) can be combined in any combination, with the exception of combinations of such mutually exclusive features.

### DESCRIPTION OF THE DRAWINGS

These and other characteristics and advantages of the invention will become clearly understood in view of the detailed description of the invention which becomes apparent from preferred embodiments of the invention, given just as examples and not being limited thereto, with reference to the drawings.
- Figure 1: This figure shows a schematic representation of a side view of some elements of a system for determining the admissibility of an aircraft workpiece in an assembly process of the aircraft workpiece on an assembly line according to an embodiment of the invention.
- Figure 2a: This figure shows the same schematic representation of the system depicted in figure 1, in which the hinge line of the aircraft workpiece is correctly aligned with the reference centreline.
- Figure 2b: This figure shows the same schematic representation of the system depicted in figure 1, in which the hinge line of the aircraft workpiece is misaligned with the reference centreline.
- Figure 3: This figure shows a schematic representation of the relationship of some elements of a system for determining the admissibility of an aircraft workpiece in an assembly process of the aircraft workpiece on an assembly line according to an embodiment of the invention.

### DETAILED DESCRIPTION OF THE INVENTION

Once the object of the invention has been outlined, specific non-limitative embodiments are described hereinafter.

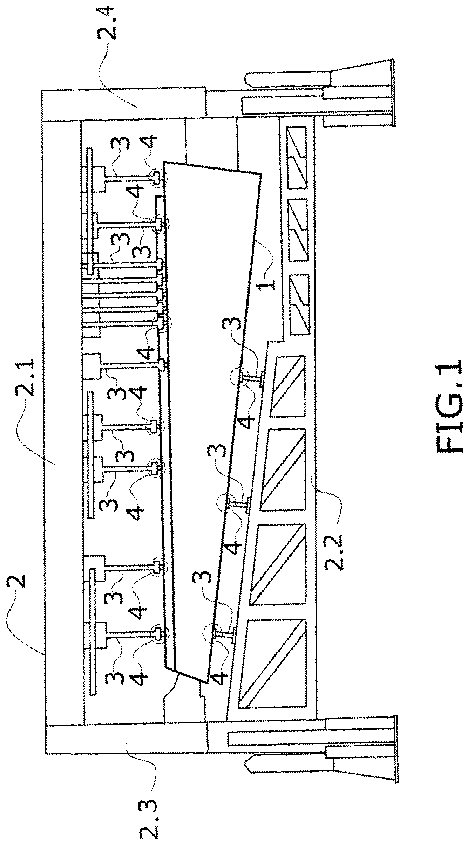

Figure 1 shows a schematic representation of a side view of some elements of a system for determining the admissibility of an aircraft workpiece on an assembly line of the aircraft workpiece (1) according to an embodiment of the second inventive aspect of the invention.

According to the second aspect of the invention, the system comprises a support frame (2), a plurality of stress measuring sensors (4) and a processing unit (5). The support frame (2) is configured for supporting an aircraft workpiece (1) throughout an assembly process via a plurality of tooling (3) which support the aircraft workpiece (1) from different attachment points. The plurality of stress measuring sensors (4) is arranged in one or more tooling (3) of the support frame (2), wherein each stress measuring sensor (4) is configured to measure stress at an attachment point of the aircraft workpiece (1) to the tooling (3) of the support frame (2).

The processing unit (5) comprises a capture module (5.1) and an Artificial intelligence module (5.3), wherein the capture module (5.1) is in data communication with at least one stress measuring sensor (4). The processing unit (5) is configured for, for at least one of the assembly line station in an assembly process of the aircraft workpiece (1):
- receiving in the capture module (5.1) stress measurement data from at least one stress measuring sensor (4); and
- determining, in the Artificial Intelligence module (5.3), whether the aircraft workpiece (1) currently being assembled would result as inadmissible after performing one or more assembly steps that have not yet been applied to the current aircraft workpiece (1), based on the stress measurement data from at least one stress measuring sensor (4); wherein the Artificial Intelligence module (5.3) comprises an Artificial Intelligence algorithm that has been trained using training data relative to admissible and/or non-admissible geometric values data of at least one part of the aircraft workpiece (1) and their corresponding measured stress.

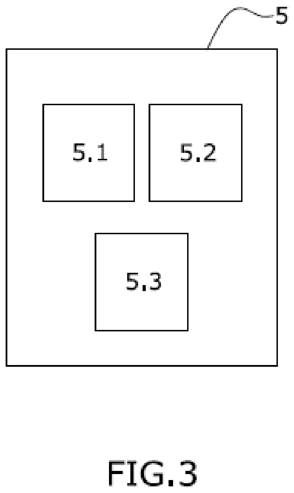

Figure 3 shows a schematic representation of a side view of some elements of the system for detecting an inadmissible assembly of an aircraft workpiece (1) in an assembly line during an assembly process according to a particular embodiment of the invention.

As shown in the embodiment of figure 3, the processing unit (5) comprises a capture module (5.1) and an Artificial intelligence module (5.3); and the capture module (5.1) comprises an analysis module (5.2). The processing unit (5) is configured for, for at least one of the assembly line station in an assembly process of the aircraft workpiece (1):
- receiving in the capture module (5.1) stress measurement data from at least one of the measuring sensors (4);
- receiving a corresponding position of measurement of each stress measuring sensors (4) on the aircraft workpiece (1);
- obtaining, by the analysis module (5.2), a map of the measured stress received by the capture module (5.1), wherein the map represents each measured stress received over different times during the assembly process, with each measured stress associated with the corresponding position of measurement of each stress measuring sensors (4) on the aircraft workpiece (1); and
- determining, in the Artificial Intelligence module (5.3), whether the aircraft workpiece (1) would result as inadmissible after performing one or more assembly steps that have not yet been applied to this aircraft workpiece (1), based on the stress measurement data from at least one stress measuring sensor (4); wherein the Artificial Intelligence module (5.3) comprises an Artificial Intelligence algorithm that has been trained using training data relative to admissible and/or non-admissible geometric values data of at least one part of the aircraft workpiece (1) and their corresponding measured stress.

For this purpose, the capture module (5.1) is in data communication with the plurality of stress measuring sensors (4). The capture module (5.1) is also in data communication with the analysis module (5.2) such that the stress measurement data received in the capture module (5.1) is transmitted to the analysis module (5.2). The analysis module (5.2) is also in data communication with the Artificial Intelligence module (5.3) such that the map of the measured stress obtained by the analysis module (5.2) is transmitted to the Artificial Intelligence module (5.3).

In the particular case of figure 3, the system comprises eight tolling (3) and eight stress measuring sensors (4). Each stress measuring sensor (4) is arranged in an end part of one tooling (3) of the support frame (2), wherein each stress measuring sensor (4) is configured to measure stress at the respective attachment point of the aircraft workpiece (1) to the tooling (3) of the support frame (2). The number, the position and the configuration of each tooling may vary, as they are designed in accordance with the specific requirements of each type of aircraft workpiece (1). Consequently, the number of stress measuring sensors (4) may also vary.

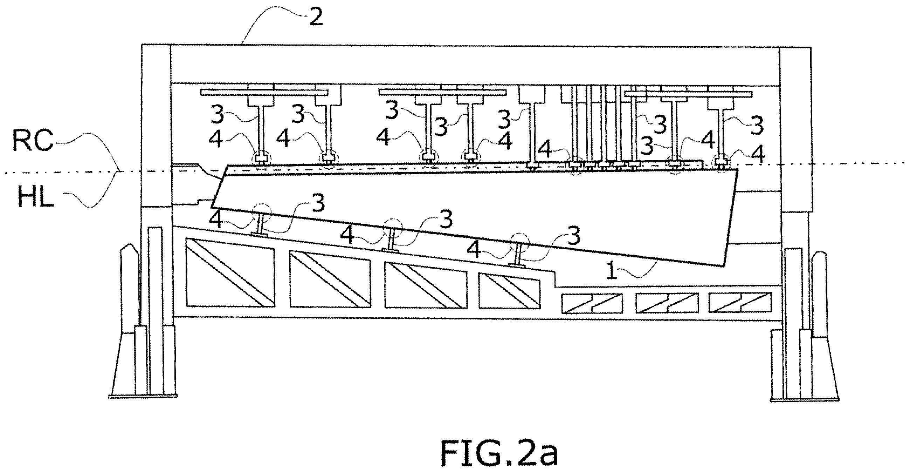

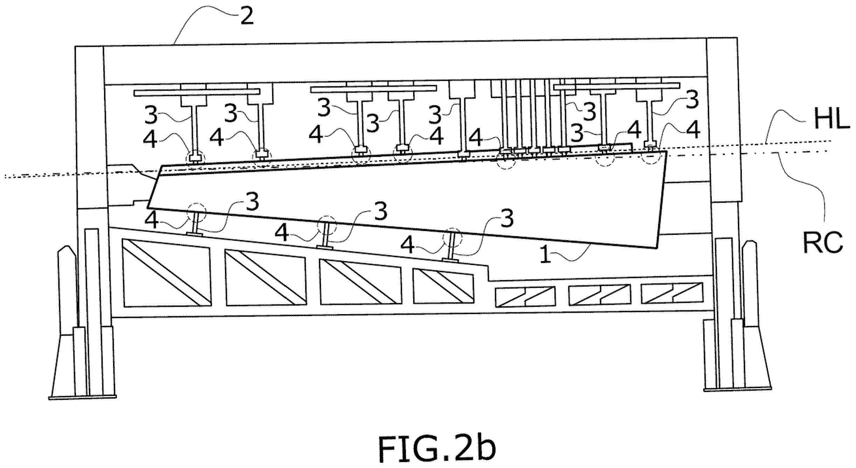

In the embodiment shown in figures 1 and 2, the support frame (2) is a production jig and the aircraft workpiece (1) is a rudder. In other embodiments (not shown), the aircraft workpiece (1) is a wing, flap, slap, slat, elevator, vertical tail plane torsion box, or horizontal tail plane torsion box.

The support frame (2) and the tooling (3) are designed in accordance with the specific requirements of each type of aircraft workpiece (1). In particular, the support frame (2) is a substantially rectangular structure within which the aircraft workpiece (1) is secured during the assembly phases. The frame of the rectangular structure comprises an upper member (2.1), a lower member (2.2) and two side members (2.3, 2.4). A plurality of tooling (3) are arranged in the support frame (2) to support the aircraft workpiece (1) via an end part of the tooling (3) from different attachment points of the aircraft workpiece (1).

In the embodiment shown in figures 1 and 2, a plurality of tooling (3) are arranged distributed along the upper member (2.1) of the support frame (2), among which only seven tooling (3) comprises a tooling. Said eight upper tooling (3) are adapted to support the aircraft workpiece (1) from eight respective attachment points. The support frame (2) also comprises three tooling (3) are arranged distributed along the lower member (2.2) of the support frame (2). Said three lower tooling (3) are adapted to support another part of the aircraft workpiece (1) via an end part of the tooling (3) from three respective attachment points of the aircraft workpiece (1). In other embodiments, the plurality of tooling (3) is distributed at specific positions around an interior part of the support frame (2), i.e., not only at the upper and lower sides but also at the side members.

The plurality of stress measuring sensors (4) are arranged in each tooling (3) of the support frame (2). In this embodiment, the plurality of tooling (3) are distributed in specific positions along the upper side (2.1) and the lower side (2.2) of the support frame (2).

Each tooling (3) comprises an end part adapted to attach the tooling (3) to a specific point on the aircraft workpiece (1).

In an embodiment, each of the stress measuring sensors (4) comprises one or more strain gages which are configured to output an electric signal, wherein the one or more strain gages are preferably of the type of a strain gage load cell.

In an embodiment, as the one shown in figures 1 and 2a y 2b, each stress measuring sensor (4) is located in one respective tooling (3) of the support frame (2).

In an embodiment, each of the stress measuring sensors (4) is arranged embedded in a specific position of an end part of a tooling (3).

In an embodiment, the Artificial Intelligence algorithm is a Machining and Deep Learning artificial intelligence algorithm.

Figure 2a shows the same schematic representation of the system as figure 1 according to an embodiment of the invention, in which the hinge line (HL) of the aircraft workpiece (1) is, at a specific stage of the assembly process, substantially aligned with the reference centreline (RC). In this embodiment, the processing unit (5) of an embodiment of the system comprising an analysis module (5.2):
- firstly, receives in the capture module (5.1) stress measurement data from at least one stress measuring sensor (4);
- secondly, obtains, by the analysis module (5.2), a map of the measured stress according to the stress measurement data; and
- thirdly, not determine, in the Artificial Intelligence module (5.3), that the aircraft workpiece (1) currently being assembled would result as inadmissible after performing one or more assembly steps that have not yet been applied to this aircraft workpiece (1), based on the map of the measured stress.

Therefore, the assembly process of the aircraft workpiece (1) continues, without any correction action regarding the assembly, for example to a next assembly line station.

Figure 2b shows the same schematic representation of the system as figure 1, but in this case the hinge line (HL) of the aircraft workpiece (1) is, at a specific stage of the assembly process, misaligned with the reference centreline (RC). In this embodiment, the processing unit (5) of the system:
- firstly, receives in the capture module (5.1) stress measurement data from at least one stress measuring sensor (4);
- secondly, obtains by the analysis module (5.2) a map of the measured stress according to the stress measurement data; and
- thirdly, determines, in the Artificial Intelligence module (5.3), that the aircraft workpiece (1) being currently assembled would result as inadmissible after performing one or more assembly steps that have not yet been applied to this aircraft workpiece (1), based on the map of the measured stress. In other words, the aircraft workpiece (1) being currently assembled would result as inadmissible, the Artificial Intelligence module (5.3) will output a signal that indicates that the aircraft workpiece (1) undergoing assembly would be considered unacceptable upon the application of subsequent assembly steps that have not yet been applied to this specific aircraft workpiece (1).

In an embodiment, in the event that the Artificial Intelligence module (5.3) determines that the aircraft workpiece (1) being currently assembled would result as inadmissible after performing one or more assembly steps that have not yet been applied to this aircraft workpiece (1), the Artificial Intelligence module (5.3) is configured for:
- outputting one or more corrective actions to modify the aircraft workpiece (1) or the assembly process based on the data analysis in the Artificial Intelligence module (5.3).

In an embodiment, the capture module (5.1) is configured for receiving at least:
- an initial stress measurement from at least one of the plurality of the stress measuring sensors before the assembly process of the aircraft workpiece (1) starts at the at least one assembly line station, and
- a final stress measurement from at least one of the plurality of the stress measuring sensors after the assembly process of the aircraft workpiece (1) is finished at the at least one assembly line station.

According to the first aspect of the invention, a method (not shown) for determining the admissibility of an aircraft workpiece (1) on an assembly line of the aircraft workpiece (1) is provided. The aircraft workpiece (1) is supported during an assembly process by a support frame (2) through a plurality of tooling (3). The method comprises the following steps, for at least one assembly line station:
- measuring stress at attachment points of the aircraft workpiece (1) to the tooling (3) of the support frame (2) by means of a plurality of stress measuring sensors (4) arranged in one or more tooling (3) of the support frame (2);
- receiving in a capture module (5.1) of a processing unit (5) stress measurement data from at least one stress measuring sensor (4); and
- determining, in an Artificial Intelligence module (5.3) of the processing unit (5), based on the stress measurement data from at least one stress measuring sensor (4), whether the aircraft workpiece (1) being currently assembled would result as inadmissible after performing one or more assembly steps that have not yet been applied to this aircraft workpiece (1); wherein the Artificial Intelligence module (5.3) comprises an Artificial Intelligence algorithm that has been trained using training data relative to admissible and/or non-admissible geometric values data of at least one part of the aircraft workpiece (1) and their corresponding measured stress.

In an embodiment of the method, the aircraft workpiece (1) comprises at least one hinge line between two parts of the aircraft workpiece (1) being assembled in a pivoting manner; wherein the determining step of the method receives at least the stress measurement data from at least two stress measuring sensors (4) arranged at the respective position of at least two attachment points of the aircraft workpiece (1) to the tooling (3) that correspond to points of the at least one hinge line (HL).

In an embodiment of the method, the steps of the method are performed at each assembly line station of the assembly process of the aircraft workpiece (1).

In an embodiment of the method, the stress measurement data is a real-time stress measurement data.

In an embodiment of the method, the step of receiving in a capture module (5.1) of the processing unit (5) stress measurement data from at least one stress measuring sensor (4) comprises:
- receiving a corresponding position of measurement of each stress measuring sensors (4) on the aircraft workpiece (1); and
- obtaining, by an analysis module (5.2) of the processing unit (5), a map of the measured stress received by the capture module (5.1), wherein the map represents each measured stress received over different times during the assembly process, with each measured stress associated with the corresponding position of measurement of each stress measuring sensors (4) on the aircraft workpiece (1).

In an embodiment of the method, if the aircraft workpiece (1) is determined by the Artificial intelligence module (5.3) to be inadmissible, the method further comprising the step of providing, preferably in real time:
- one or more corrective actions to modify the aircraft workpiece (1) or the assembly process, based on data analysis in the Artificial Intelligence module (5.3).

In an embodiment of the method, the one or more corrective actions are intended for implementation at one or more stages subsequent to those already carried out on the assembly line.

In a particular embodiment of the method, the step of stress measuring comprises, for at least one assembly line station:
- measuring stress before the assembly process of the aircraft workpiece (1) starts at the at least one assembly line station, and
- measuring stress after the assembly process of the aircraft workpiece (1) is finished at the at least one assembly line station.

In an embodiment of the method, the steps are performed at a plurality of assembly line stations of the assembly line, preferably at each assembly line station of the assembly line of the aircraft workpiece.

In an embodiment of the method, the aircraft workpiece (1) is a wing, flap, slap, slat, elevator, vertical tail plane torsion box, rudder or horizontal tail plane torsion box.

In a particular embodiment of the method, the Artificial Intelligence algorithm is a Machining and Deep Learning artificial intelligence algorithm.

## Claims

1. Method for determining the admissibility of an aircraft workpiece (1) on an assembly line of the aircraft workpiece (1), the aircraft workpiece (1) being supported by a support frame (2) through a plurality of tooling (3) throughout an assembly process; the method comprising the following steps, for at least one assembly line station:
- measuring stress at attachment points of the aircraft workpiece (1) to the tooling (3) of the support frame (2) by means of a plurality of stress measuring sensors (4) arranged in one or more tooling (3) of the support frame (2);
- receiving in a capture module (5.1) of a processing unit (5) stress measurement data from at least one stress measuring sensor (4); and
- determining, in an Artificial Intelligence module (5.3) of the processing unit (5), based on the stress measurement data from at least one stress measuring sensor (4), whether the aircraft workpiece (1) currently being assembled would result as inadmissible after performing one or more assembly steps that have not yet been applied to the current aircraft workpiece (1); wherein the Artificial Intelligence module (5.3) comprises an Artificial Intelligence algorithm that has been trained using training data relative to admissible and/or non-admissible geometric values data of at least one part of the aircraft workpiece (1) and their corresponding measured stress.

2. The method according to claim 1, wherein the aircraft workpiece (1) comprises at least one hinge line between two parts of the aircraft workpiece (1) being assembled in a pivoting manner; wherein the determining step of the method receives at least the stress measurement data from at least two stress measuring sensors (4) arranged at the respective position of at least two attachment points of the aircraft workpiece (1) to the tooling (3) that correspond to points of the at least one hinge line (HL).

3. The method according to claim 1 or 2, wherein the step of receiving in a capture module (5.1) of the processing unit (5) stress measurement data from at least one stress measuring sensor (4) further comprises:
- receiving a corresponding position of measurement of each stress measuring sensors (4) on the aircraft workpiece (1); and
- obtaining, by an analysis module (5.2) of the processing unit (5), a map of the measured stress received by the capture module (5.1), wherein the map represents each measured stress received over different times during the assembly process, with each measured stress associated with the corresponding position of measurement of each stress measuring sensors (4) on the aircraft workpiece (1).

4. The method according to any one of previous claims, wherein in the event that the aircraft workpiece (1) is determined by the Artificial intelligence module (5.3) to be inadmissible, the method further comprises the step of:
- providing one or more corrective actions to modify the aircraft workpiece (1) or the assembly process.

5. The method according to the previous claim, wherein the one or more corrective actions are intended for implementation at one or more stages subsequent to those already carried out on the assembly line.

6. The method according to any one of previous claims, wherein the step of stress measuring comprises, for at least one assembly line station:
- measuring stress before the assembly process of the aircraft workpiece (1) starts at the at least one assembly line station, and
- measuring stress after the assembly process of the aircraft workpiece (1) is finished at the at least one assembly line station.

7. The method according to any one of previous claims, wherein the steps of the method are performed at a plurality of assembly line stations of the assembly line, preferably at each assembly line station of the assembly line of the aircraft workpiece.

8. The method according to any one of previous claims, wherein the aircraft workpiece (1) is a wing, flap, slap, slat, elevator, vertical tail plane torsion box, rudder or horizontal tail plane torsion box.

9. System for determining the admissibility of an aircraft workpiece (1) on an assembly line of the aircraft workpiece (1), the system comprising:
- a support frame (2) configured for supporting the aircraft workpiece (1) throughout an assembly process, wherein the support frame (2) comprises a plurality of tooling (3) adapted for supporting the aircraft workpiece (1) from different attachment points;
- a plurality of stress measuring sensors (4) arranged in one or more tooling (3) of the support frame (2), wherein each stress measuring sensor (4) is configured to measure stress at an attachment point of the aircraft workpiece (1) to the tooling (3) of the support frame (2); and
- a processing unit (5) comprising a capture module (5.1) and an Artificial intelligence module (5.3), wherein the capture module (5.1) is in data communication with at least one stress measuring sensor (4), and the processing unit (5) is configured for, for at least one of the assembly line station in an assembly process of the aircraft workpiece (1):
- receiving in the capture module (5.1) stress measurement data from at least one stress measuring sensor (4); and
- determining, in the Artificial Intelligence module (5.3), whether the aircraft workpiece (1) currently being assembled would result as inadmissible after performing one or more assembly steps that have not yet been applied to the current aircraft workpiece (1), based on the stress measurement data from at least one stress measuring sensor (4); wherein the Artificial Intelligence module (5.3) comprises an Artificial Intelligence algorithm that has been trained using training data relative to admissible and/or non-admissible geometric values data of at least one part of the aircraft workpiece (1) and their corresponding measured stress.

10. The system according to claim 9, wherein:
- the capture module (5.1) further comprises an analysis module (5.2); and
- the processing unit (5) is further configured for, for at least one of the assembly line station in an assembly process of the aircraft workpiece (1):
- receiving a corresponding position of measurement of each stress measuring sensors (4) on the aircraft workpiece (1); and
- obtaining, by the analysis module (5.2), a map of the measured stress received by the capture module (5.1), wherein the map represents each measured stress received over different times during the assembly process, with each measured stress associated with the corresponding position of measurement of each stress measuring sensors (4) on the aircraft workpiece (1).

11. The system according to claim 9 or 10, wherein each of the stress measuring sensors (4) comprises one or more strain gages which are configured to output an electric signal, wherein the one or more strain gages are preferably of the type of a strain gage load cell.

12. The system according to any one of claims 9 to 11, wherein each stress measuring sensor (4) is located in one respective tooling (3) of the support frame (2).

13. The system according to any one of claims 9 to 12, wherein, in the event that the Artificial Intelligence module (5.3) determines that the aircraft workpiece (1) is inadmissible, the Artificial Intelligence module (5.3) is further configured for:
- outputting one or more corrective actions to modify the aircraft workpiece (1) or the assembly process.

14. The system according to any one of claims 9 to 13, wherein the capture module (5.1) is configured for receiving at least:
- an initial stress measurement from at least one of the plurality of stress measuring sensors before the assembly process of the aircraft workpiece (1) starts at the at least one assembly line station, and
- a final stress measurement from at least one of the plurality of stress measuring sensors after the assembly process of the aircraft workpiece (1) is finished at the at least one assembly line station.

15. The system according to any one of claims 9 to 14, wherein the Artificial Intelligence algorithm is a Machining and Deep Learning artificial intelligence algorithm.
